# EUROPÄISCHE PATENTANMELDUNG

(11) **EP 4 666 834 A1**
(43) Veröffentlichungstag der Anmeldung: **24.12.2025**
(21) Anmeldenummer: 25176416.3
(22) Anmeldetag: 14.05.2025
(51) Int. Cl.: A01D 43/08, A01D 75/18, A01F 29/16

(54) **LANDWIRTSCHAFTLICHE ERNTEMASCHINE**

(30) Priorität: 18.06.2024 DE 102024117084
(71) Anmelder: CLAAS Selbstfahrende Erntemaschinen GmbH, 33428 Harsewinkel (DE)
(72) Erfinder: Frye, Simon, 88263 Horgenzell (DE); Pflanze, Sascha, 88348 Bad Saulgau (DE)
(74) Vertreter: CLAAS Gruppe

(57) **Zusammenfassung**

Die Erfindung betrifft eine landwirtschaftliche Erntemaschine (1), insbesondere Feldhäcksler, mit einem Erntevorsatz (2) zum Aufnehmen von Erntegut (3) aus einem Feldbestand (4), mit einem mindestens eine Einzugswalze (5a, 5b, 5c, 5d) aufweisenden Förderaggregat (5) zum Fördern des aufgenommenen Ernteguts (3), mit einem Verarbeitungsaggregat (7), dem das Erntegut (3) von dem Förderaggregat (5) zugefördert wird und das das Erntegut (3) verarbeitet, und mit einer Metalldetektionseinrichtung (10), die mit einer der Einzugswalzen (5a, 5b, 5c, 5d) derart gekoppelt ist, dass metallische Fremdkörper (9) im an der Einzugswalze (5a) vorbeigeführten Erntegut (3) erfasst werden können, wobei die landwirtschaftliche Erntemaschine (1) eine mit der Metalldetektionseinrichtung (10) in signal übertragender Weise verbundene Steuerungseinrichtung (12) aufweist, die zum Identifizieren periodisch auftretender Abweichungen (17) eines Messsignals (14) der Metalldetektionseinrichtung (10) von einer Referenzmessung (18) vorgesehen und eingerichtet ist, wobei bei einer Identifikation der periodisch auftretenden Abweichungen (17) eine Hinweismeldung ausgegeben wird, bevor die periodisch auftretenden Abweichungen (17) einen Detektionsschwellwert (13) überschreiten.

## Beschreibung

Die Erfindung betrifft eine landwirtschaftliche Erntemaschine gemäß dem Oberbegriff des Anspruchs 1.

Bei landwirtschaftlichen Erntemaschinen, insbesondere selbstfahrenden Erntemaschinen, beispielsweise Feldhäckslern, ist es bekannt, eine Metalldetektionseinrichtung einzusetzen, um eventuell gemeinsam mit dem Erntegut ins Innere der Erntemaschine eingedrungene Metallkörper, wie zum Beispiel Wenderzinken, Teile von Weidezäunen, Dosen, Nägel oder dergleichen, zu erkennen und in diesem Fall die das Erntegut handhabenden Arbeitsaggregate der Erntemaschine automatisch abzuschalten. Das Grundprinzip einer solchen Metalldetektion ist beispielsweise in der DE 196 20 526 A1 beschrieben.

Aus der DE 10 2017 115 465 A1 ist ein Feldhäcksler bekannt, der in Fahrtrichtung vorne einen Erntevorsatz aufweist, wobei in Förderrichtung des Ernteguts dem Erntevorsatz ein Förderaggregat mit mehreren Einzugswalzen nachgeschaltet ist. Bei einem vorderen Einzugswalzenpaar ist die untere Einzugswalze mit einer Metalldetektionseinrichtung gekoppelt, das heißt, die Einzugswalze und die Metalldetektionseinrichtung bilden eine Einheit, die es erlaubt, metallische Fremdkörper im an der Einzugswalze vorbeigeführten Erntegut zu erfassen und ein entsprechendes Detektionssignal zu generieren, das einen Schnellstopp der relevanten Arbeitsaggregate auslöst. Bei einem solchen Schnellstopp wird die Erntegutzufuhr abrupt gestoppt, wobei zugleich die Häckseltrommel und die Förderaggregate angehalten werden.

Die Metalldetektionseinrichtung ist üblicherweise innerhalb einer der beiden vorderen Einzugswalzen ortsfest angeordnet. Die Einbaulage der Metalldetektionseinrichtung bedingt jedoch Störungen, die zu einem Fehlauslösen der Metalldetektionseinrichtung führen können, das heißt die Metalldetektionseinrichtung generiert ein Detektionssignal, das aus Sicherheitsgründen den Schnellstopp auslöst, das allerdings in diesem Fall nicht von einem metallischen Fremdkörper im Erntegut herrührt, sondern von einer Verschmutzung oder einer Beschädigung wie einem Riss, einer Verformung oder dergleichen der mit der Metalldetektionseinrichtung gekoppelten Einzugswalze. Beschädigungen können beispielsweise durch Verschleiß im Bereich der Einzugswalze entstehen. In Regionen mit erzhaltigem Boden können sich auch metallische Verunreinigungen an den Einzugswalzen anhaften, die dann suggerieren, es sei ein metallischer Fremdkörper im Erntegutstrom detektiert worden. Auch Risse und Verformungen der Einzugswalze können dazu führen, dass die Metalldetektionseinrichtung fehlauslöst. Da der Bediener der Erntemaschine bei einem von einem Detektionssignal ausgelösten Schnellstopp nicht den Grund dafür kennt, muss er die relevanten Bereiche des Förderaggregats und das umliegende Erntegut selbst in Augenschein nehmen, was relativ viel Zeit in Anspruch nehmen kann. Die DE 10 2017 115 465 A1 schlägt eine landwirtschaftlich Erntemaschine vor, die es dem Bediener vereinfacht den Grund für den von einem Detektionssignal ausgelösten Schnellstopp zu identifizieren. Dennoch führt eine Fehlauslösung zunächst zu ungeplanten sowie unerwünschten Standzeiten der Erntemaschine und der Erntebetrieb kann erst fortgesetzt werden, sobald die Ursache für die Fehlauslösung ermittelt wurde.

Es ist deshalb Aufgabe der Erfindung, die beschriebenen Nachteile des Standes der Technik zu vermeiden und insbesondere eine landwirtschaftlich Erntemaschine zu schaffen, die ein frühzeitiges Identifizieren von Beschädigungen des Förderaggregats oder sich an zumindest einer der Einzugswalzen des Förderaggregats anhaftenden metallischen Verunreinigungen ermöglicht, vorzugsweise bevor diese zu einem ungewünschten Schnellstopp der landwirtschaftlichen Erntemaschine führen.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird eine landwirtschaftliche Erntemaschine vorgeschlagen, insbesondere Feldhäcksler, mit einem Erntevorsatz zum Aufnehmen von Erntegut aus einem Feldbestand, mit einem mindestens eine Einzugswalze aufweisenden Förderaggregat zum Fördern des aufgenommenen Ernteguts, mit einem Verarbeitungsaggregat, dem das Erntegut von dem Förderaggregat zugefördert wird und das das Erntegut verarbeitet, und mit einer Metalldetektionseinrichtung, die mit einer der Einzugswalzen derart gekoppelt ist, dass metallische Fremdkörper im an der Einzugswalze vorbeigeführten Erntegut erfasst werden können, wobei die landwirtschaftliche Erntemaschine eine mit der Metalldetektionseinrichtung in signalübertragender Weise verbundene Steuerungseinrichtung aufweist, die zum Identifizieren periodisch auftretender Abweichungen eines Messsignals der Metalldetektionseinrichtung von einer Referenzmessung vorgesehen und eingerichtet ist, wobei bei einer Identifikation der periodisch auftretenden Abweichungen eine Hinweismeldung ausgegeben wird, bevor die periodisch auftretenden Abweichungen einen Detektionsschwellwert überschreiten.

Die Erfindung hat viele Vorteile. Periodisch auftretende Abweichungen von einer Referenzmessung werden in der Regel von metallischen Verunreinigungen oder Beschädigungen einer der Einzugswalzen des Einzugsaggregats verursacht. Dadurch, dass diese periodisch auftretenden Abweichungen mittels eines Vergleichs zu einer Referenzmessung identifiziert werden, kann dem Bediener der Erntemaschine frühzeitig ein Hinweis gegeben werden. Der Hinweis erfolgt vor einer Fehlauslösung, sodass der Bediener an einen für Ihn am besten geeigneten Zeitpunkt die Verunreinigungen entfernen oder die Beschädigungen beheben kann. Mithin können durch eine Fehlauslösung erforderliche ungeplante Standzeiten der Erntemaschine vermieden werden.

Eine vorteilhafte Weiterbildung sieht vor, dass die Steuerungseinrichtung zum Ansteuern des Förderaggregats vorgesehen und eingerichtet ist, wobei die Steuerungseinrichtung das Förderaggregat derart ansteuert, sodass diese bei einem Überschreiten des Detektionsschwellwerts das Förderaggregat stoppt. Diese vorteilhafte Ausgestaltung sieht vor, dass metallische Gegenstände nicht in das Innere der Erntemaschine gelangen und die Arbeitsaggregate beschädigen. Ein Stoppen des Förderaggregats bedeutet hier und vorzugsweise, dass eine Rotationsbewegung der Einzugswalzen des Förderaggregats abrupt angehalten wird. Besonders bevorzugt wird jedoch die gesamte Erntemaschine bei einem Überschreiten des Detektionsschwellwerts gestoppt. Die Hinweismeldung erfolgt vor einem solchen Stoppen.

Eine vorteilhafte Weiterbildung sieht vor, dass die Referenzmessung das Messsignal der Metalldetektionseinrichtung bei einem erntegutfreien Umlauf der mit der Metalldetektionseinrichtung gekoppelten Einzugswalze umfasst. Hierdurch können lediglich durch das Förderaggregat an der Messeinrichtung induzierte Störspannungen ermittelt werden. Insofern sich in einem sich an die Referenzmessung anschließenden Erntebetrieb, also einem Erntebetrieb, bei dem ein Transport von Erntegut durch das Förderaggregat erfolgt, metallische Verunreinigungen an einer der Einzugswalzen des Förderaggregats anhaften, bewirken diese eine Veränderung der induzierten Spannung und somit ein gegenüber der Referenzmessung abweichendes Messsignal. Diese Abweichungen können zur Identifikation der Verunreinigungen basierend auf der Referenzmessung ermittelt werden.

Eine vorteilhafte Weiterbildung sieht vor, dass die Referenzmessung zumindest eine mittels der Metalldetektionseinrichtung induzierte Spannung in Abhängigkeit eines Drehwinkels der mit der Metalldetektionseinrichtung gekoppelten Einzugswalze umfasst. Mithin können die induzierten Spannungen einer Winkelposition der Einzugswalze zugeordnet werden. Im Erntebetrieb können die induzierten Spannungen mit dem Referenzsignal im Bezug auf die Winkelposition verglichen werden.

Eine vorteilhafte Weiterbildung sieht vor, dass das Messsignal eine in der Metalldetektionseinrichtung induzierte Spannung ist.

Eine vorteilhafte Weiterbildung sieht vor, dass die Steuerungseinrichtung dazu vorgesehen und eingerichtet ist, ein kompensiertes Signal zu ermitteln, indem diese ein im Erntebetrieb der landwirtschaftliche Erntemaschine mittels der Metalldetektionseinrichtung ermitteltes Messsignal mit der Referenzmessung verrechnet, insbesondere das Messsignal von der Referenzmessung subtrahiert oder die Referenzmessung von dem Messsignal der Metalldetektionseinrichtung subtrahiert. Mittels des kompensierten Signals können die periodischen Abweichungen auf besonders vorteilhafte Art und Weise ermittelt werden.

Eine vorteilhafte Weiterbildung sieht vor, dass die periodisch auftretenden Abweichungen von einer Nulllinie des kompensierten Signals abweichende Störspannungen sind, wobei bei einem Überschreiten eines Grenzwertes des kompensierten Signals die Hinweismeldung ausgegeben wird, wobei vorzugsweise der Grenzwert kleiner als der Detektionsschwellwert ist. Hierdurch kann vor einer Fehlauslösung, bzw. einen durch Verunreinigungen oder Beschädigungen hervorgerufen Stoppen des Förderaggregats, der Bediener der Erntemaschine über die Verunreinigungen und/oder Beschädigungen informiert werden.

Eine vorteilhafte Weiterbildung sieht vor, dass die landwirtschaftliche Erntemaschine eine Anzeigeeinrichtung umfasst, wobei bei einer Identifikation der periodisch auftretenden Abweichungen die Hinweismeldung auf der Anzeigeeinrichtung angezeigt wird, wobei die Hinweismeldung vorzugsweise einen Hinweis umfasst, dass zumindest eine der Einzugswalzen auf Verunreinigungen und/oder Beschädigungen zu prüfen ist.

Eine vorteilhafte Weiterbildung sieht vor, dass die Anzeigeeinrichtung eine graphische Darstellung eines Zustands und/oder eine den Zustand repräsentierende Kennziffer zumindest einer der Einzugswalzen, insbesondere der mit der Metalldetektionseinrichtung gekoppelten Einzugswalze anzeigt, wobei die graphische Darstellung vorzugsweise ein Balkendiagramm umfasst. Die Kennziffer kann hierbei eine Abweichung der Referenzmessung von dem Messignal der Metalldetektionseinrichtung beschreiben.

Eine vorteilhafte Weiterbildung sieht vor, dass der graphisch dargestellte Zustand der zumindest einen Einzugswalze eine graphische Darstellung einer Abweichung der Referenzmessung von dem Messsignal der Metalldetektionseinrichtung umfasst. Hierdurch kann ein Bediener der Erntemaschine den Zustand der Einzugswalze jederzeit prüfen.

Eine vorteilhafte Weiterbildung sieht vor, dass die periodisch auftretenden Abweichungen durch zumindest an einer der Einzugswalzen anhaftenden metallischen Verunreinigung und/oder Beschädigung verursacht sind.

Die vorliegende Erfindung wird nachstehend anhand eines in den Zeichnungen dargestellten Ausführungsbeispiels näher erläutert. Es zeigen:
- Figur 1: eine schematische Darstellung einer vorschlagsgemäßen landwirtschaftlichen Erntemaschine im Erntebetrieb;
- Figur 2: schematisch eine Metalldetektionseinrichtung der Erntemaschine aus Fig. 1;
- Figur 3: ein mittels der Metalldetektionseinrichtung gemäß Fig. 2 erfasstes Messsignal;
- Figur 4: ein kompensiertes Messsignal;
- Figur 5: eine graphische Darstellung eines Zustand einer Einzugswalze.

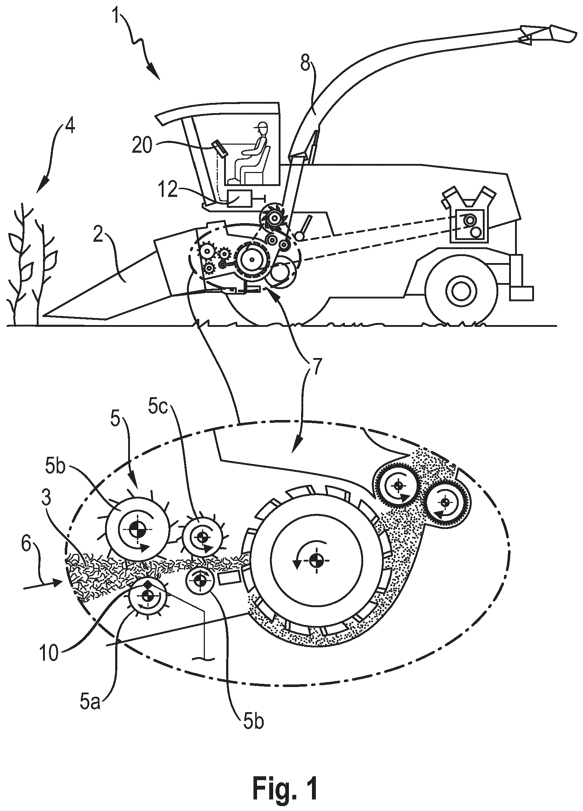

Bei der in Fig. 1 schematisch dargestellten landwirtschaftlichen Erntemaschine 1 handelt es sich um einen Feldhäcksler. In Fahrtrichtung vorne am Feldhäcksler 1 ist ein Erntevorsatz 2 angeordnet, hier beispielsweise ein Maisgebiss, der bzw. das zum Aufnehmen bzw. Ernten von Erntegut 3 aus einem Feldbestand 4, hier einem Maisfeld, dient. Mittels eines Schneidaggregats (nicht dargestellt) des Erntevorsatzes 2 wird der Feldbestand 4 in einer bestimmten Höhe über dem Boden abgeschnitten und dann ins Innere der landwirtschaftlichen Erntemaschine 1 befördert.

Dem Erntevorsatz 2 nachgeschaltet ist ein Förderaggregat 5 zum Fördern des über den Erntevorsatz 2 aufgenommenen Ernteguts 3 sowie ein in Strömungsrichtung 6 dem Förderaggregat 5 nachgeschaltetes Verarbeitungsaggregat 7, hier vorzugsweise in Form eines Häckselaggregats zum Häckseln des Ernteguts 3 auf eine vorgegebene Schnittlänge. Das Erntegut 3 wird dem Verarbeitungsaggregat bzw. Häckselaggregat 7 von dem Förderaggregat 5 zugefördert, wozu das Förderaggregat 5 vorzugsweise mehrere Einzugswalzen 5a, 5b, 5c, 5d, insbesondere vier Einzugswalzen 5a, 5b, 5c, 5d, aufweist. Die beiden vorderen Einzugswalzen 5a, 5b dienen auch zum Vorpressen des Ernteguts 3, sie werden daher auch als Vorpresswalzen 5a, 5b bezeichnet. Das Erntegut 3 wird dann von dem zweiten Einzugswalzenpaar 5c, 5d dem Verarbeitungs- bzw. Häckselaggregat 7 zugeführt, in dem das Erntegut 3 gehäckselt und beschleunigt wird, woraufhin das Erntegut 3, gegebenenfalls nach einer Nachbeschleunigung, nach oben über ein Überladerohr 8 auf einen von der landwirtschaftlichen Erntemaschine 1 gezogenen Anhänger oder ein nebenher fahrendes Transportfahrzeug ausgeworfen wird.

Um zu vermeiden, dass metallische Fremdkörper 9 mit dem Erntegut 3 ins Maschineninnere gelangen können und zu Beschädigungen von Arbeitsaggregaten oder zu Verunreinigungen des Ernteguts 3 führen, weist die landwirtschaftliche Erntemaschine 1 ferner eine Metalldetektionseinrichtung 10 auf, die mit einer der Einzugswalzen 5a, 5b, 5c, 5d, hier und vorzugsweise der vorderen unteren Einzugswalze 5a, gekoppelt ist. Sobald ein metallischer, ferromagnetischer Fremdkörper 9 im an der Einzugswalze 5a vorbeigeführten Erntegut 3 von der Metalldetektionseinrichtung 10 erfasst wird, gibt diese ein Messsignal aus, welches oberhalb eines Detektionsschwellwerts 13 liegt und zu einem sofortigen Stopp (Schnellstopp) der landwirtschaftlichen Erntemaschine 1 bzw. der wesentliche Arbeitsaggregate führt, um zu verhindern, dass der Fremdkörper 9 weiter ins Maschineninnere gelangt.

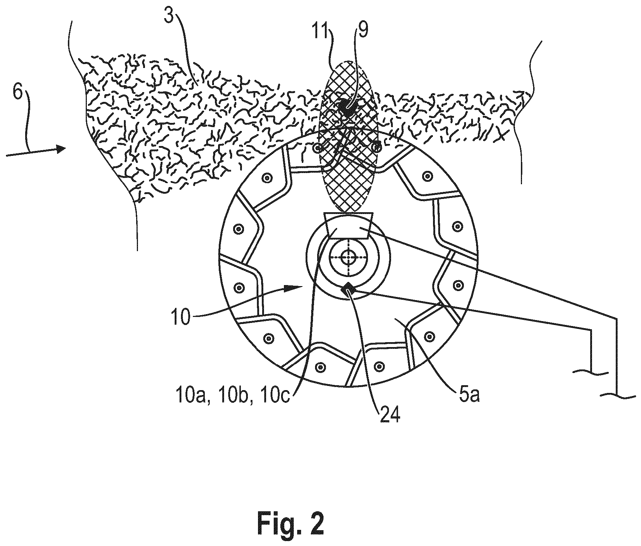

In Fig. 2 ist die Einzugswalze 5a mit der Metalldetektionseinrichtung 10 dargestellt. Gemäß Fig. 2. wird ein metallischer Fremdkörper 9 im Erntegut 3 erfasst, was zu einem Schnellstopp zumindest des Förderaggregats 5, vorzugsweise von der landwirtschaftlichen Erntemaschine 1 führt. Als Schnellstopp ist im Sinne der vorliegenden Anmeldung zumindest ein Stoppen einer Rotationsbewegung der Einzugswalzen 5a-d des Förderaggregats 5 zu verstehen. Die Metalldetektionseinrichtung 10 weist hier und vorzugsweise eine Magnetanordnung 10a, insbesondere eine mindestens eine Spule aufweisende Elektromagnetanordnung, auf, die konfiguriert ist, ein Magnetfeld 11 zu erzeugen, wobei die Metalldetektionseinrichtung 10 und/oder Magnetanordnung 10a hier und vorzugsweise derart zum an der Einzugswalze 5a vorbeigeführten Erntegut 3 ausgerichtet ist, insbesondere derart innerhalb der Einzugswalze 5a angeordnet ist, dass das Magnetfeld 11 zu dem an der Einzugswalze 5a vorbeigeführte Erntegut 3, hier nach oben, ausgerichtet ist, so dass das Erntegut 3 das Magnetfeld 11 durchläuft. Sobald ein metallischer und insbesondere magnetischer Fremdkörper 9 das Magnetfeld 11 passiert, verändert sich das Magnetfeld 11, was von der Metalldetektionseinrichtung 10, insbesondere einer Messeinrichtung 10b, erkannt wird. Die Metalldetektionseinrichtung 10, insbesondere eine Signalerzeugungseinrichtung 10c der Metalldetektionseinrichtung 10, generiert dann basierend auf der erfassten Veränderung des Magnetfelds 11 das bereits beschriebene, einen Detektionsschwellwert 13 überschreitende Messsignal, welches im Weiteren auch als Detektionssignal bezeichnet wird. Das Detektionssignal wird von einer Steuerungseinrichtung 12 der landwirtschaftlichen Erntemaschine 1 empfangen und verarbeitet, woraufhin die Steuerungseinrichtung 12 den besagten Schnellstopp veranlasst. Weiterhin kann eine Sensoranordnung 24 zur Erfassung einer Winkelstellung der Einzugswalze 5a im Inneren der Einzugswalze 5a angeordnet sein.

Neben metallischen Fremdkörpern können auch metallische Anhaftungen an einer der Einzugswalzen sowie Beschädigungen wie Risse, Verformungen oder dergleichen zu einer Veränderung des Magnetfelds 11 führen, die so stark ist, dass der Detektionsschwellwert 13 für eine Veränderung des Magnetfelds 11 überschritten wird und daraufhin ein Detektionssignal von der Metalldetektionseinrichtung 10 erzeugt wird. In diesem Fall wird also ein Detektionssignal auch dann erzeugt, wenn kein metallischer Fremdkörper 9 im Erntegut 3 an der Metalldetektionseinrichtung 10 vorbeigeführt wird. Ein solches Generieren eines Detektionssignals wird hier auch als Fehlauslösung bezeichnet.

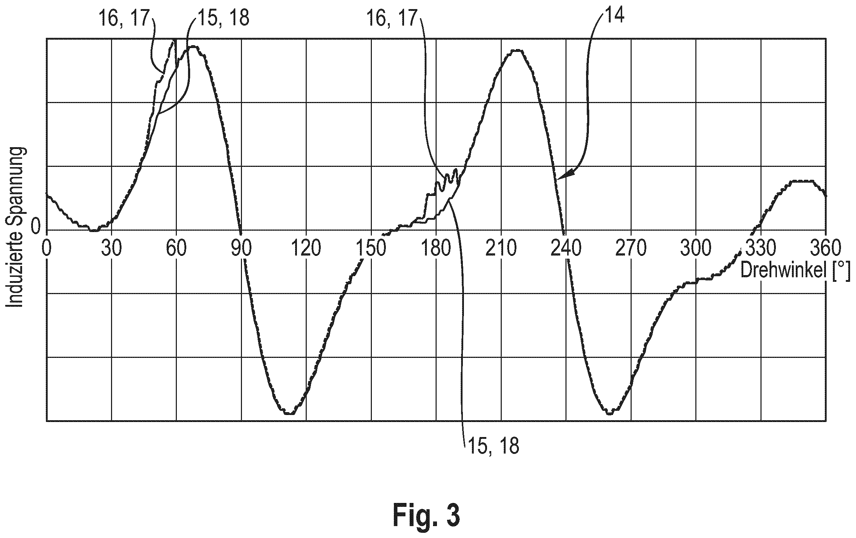

Fig. 3 zeigt ein exemplarisches Messsignal 14, welches mittels der Metalldetektionseinrichtung 10 im Erntebetrieb der landwirtschaftlichen Erntemaschine 1 ermittelt wurde. Das Messsignal 14 umfasst eine in der Metalldetektionseinrichtung 10 induzierte Spannung, die in Abhängigkeit eines Drehwinkels einer mit der Metalldetektionseinrichtung 10 gekoppelten Einzugswalze 5a ermittelt wurde. In der Darstellung gemäß Fig. 3 ist das Messsignal 14 als Rohsignal über eine Umdrehung der Einzugswalze 5a dargestellt. Das Rohsignal umfasst hierbei sowohl induzierte Störspannungen 15, die ausschließlich durch das Förderaggregat 5, insbesondere durch eine Rotation der metallischen Einzugswalze 5a, an der Metalldetektionseinrichtung 10 induziert worden sind und zusätzlich Störspannungen 16, die durch metallische Anhaftungen an der Einzugswalze 5a induziert worden sind. Die Ermittlung der durch metallische Anhaftungen und/oder durch Beschädigungen der Einzugswalze 5a generierten Störspannungen 16 erfolgt hierbei periodisch mit jeder Umdrehung der Einzugswalze 5a.

Um zu vermeiden, dass die durch metallische Anhaftungen und/oder Beschädigungen induzierten Störspannungen 16 den Detektionsschwellwert 13 überschreiten und zu einer Fehlauslösung führen, werden die Störspannungen 16 mittels der Steuerungseinrichtung 12 ermittelt. Hierfür wird zunächst eine Referenzmessung 18 durchgeführt. In dieser Referenzmessung 18 wird das Messsignal 14 der Metalldetektionseinrichtung 10 in Abhängigkeit eines Drehwinkels der Einzugswalze 5a bei einem erntegutfreien Betrieb des Förderaggregats 5 aufgezeichnet und in einem Speicher (nicht näher dargestellten) der Steuerungseinrichtung 12 hinterlegt. Die im erntegutfreien Betrieb des Förderaggregats 5 induzierten Spannungen umfassen somit lediglich die Störspannungen 15 des Förderaggregats 5, da hierbei keine Fremdkörper bzw. metallische Fremdkörper von dem Förderaggregat 5 gefördert werden.

Die Referenzmessung 18 wird bei einem darauffolgenden Erntebetrieb der landwirtschaftlichen Erntemaschine 1 zur Ermittlung von sich im Erntebetrieb an dem Förderaggregat 5, insbesondere der Einzugswalze 5a, ansammelnden metallischen Verunreinigungen und/oder Beschädigungen verwendet. Derartige metallische Verunreinigungen und/oder Beschädigungen induzieren im Erntebetrieb der Erntemaschine die Störspannungen 16, die periodisch auftretende Abweichungen 17 von der Referenzmessung 18 bilden.

Bei einer Identifikation der Störspannungen 16 bzw. der periodisch auftretenden Abweichungen 17 wird eine Hinweismeldung an einen Bediener der landwirtschaftlichen Erntemaschine 1 ausgegeben, bevor die periodisch auftretenden Abweichungen 17 einen Detektionsschwellwert 13 überschreiten und somit eine Fehlauslösung bewirken. Die Hinweismeldung umfasst hierbei einen Hinweis, dass die Einzugswalze 5a auf Verunreinigungen und/oder Beschädigungen zu prüfen ist, sodass ein Bediener der Erntemaschine 1 vor einer Fehlauslösung die Verunreinigungen entfernen und/oder Beschädigungen reparieren kann. Hier und vorzugsweise kann die Hinweismeldung auf einer in Fig. 1 dargestellten Anzeigeeinrichtung 20 ausgegeben werden.

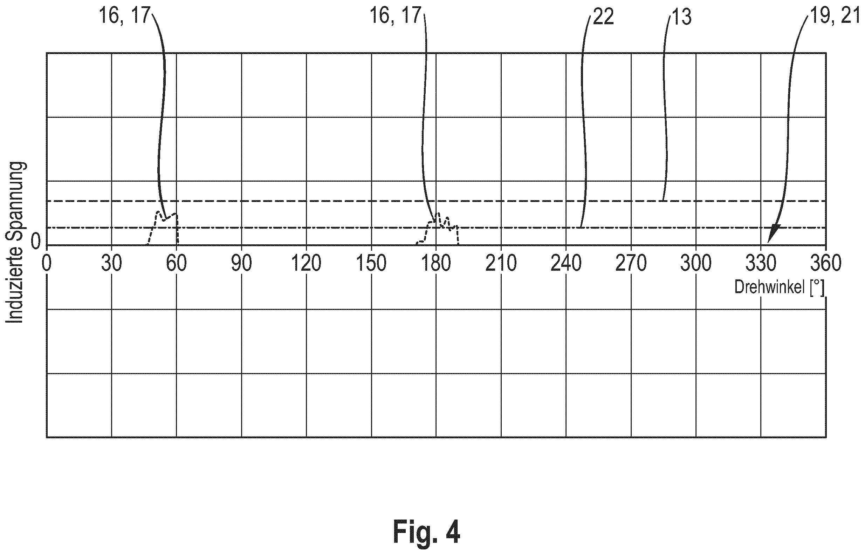

Hier und vorzugsweise ist die Steuerungseinrichtung 12 derart konfiguriert, dass diese zum Identifizieren der periodisch auftretenden Abweichungen 17 ein in Fig. 4 dargestelltes kompensiertes Signal 19 ermittelt. Das kompensierte Signal 19 umfasst die Differenz eines im Erntebetrieb von der Metalldetektionseinrichtung 10 ermittelten Messsignals 14 und der Referenzmessung 18. Insofern sich seit der Erfassung der Referenzmessung 18 keine metallischen Verunreinigungen an der Einzugswalze 5a angesammelt haben und die Einzugswalze 5a nicht beschädigt wurde, verläuft das kompensierte Signal 19 im Wesentlichen entlang der Nulllinie 21. Durch Verunreinigungen oder Beschädigungen induzierte Störspannungen 16 bilden von der Nulllinie 21 abweichende Messwerte. In Fig. 4 ist der Detektionsschwellwert 13 durch eine gestrichelte Linie dargestellt. Ein weiterer Grenzwert 22, der kleiner als der Detektionsschwellwert 13 ist, ist durch eine zweite gestrichelte Linie abgebildet. Die Steuerungseinrichtung 12 ist derart konfiguriert, sodass diese bei einem überschreiten des Grenzwerts 22 die Hinweismeldung ausgibt. Dadurch, dass dieser Grenzwert 22 kleiner als der Detektionsschwellwert 13 ist, wird die Hinweismeldung ausgegeben, bevor die periodisch auftretenden Abweichungen 17 den Detektionsschwellwert 13 überschreiten. Mithin wird der Bediener der landwirtschaftlichen Erntemaschine 1 vor einer Fehlauslösung über sich an der Einzugswalze 5a ansammelnde Verunreinigungen oder Beschädigungen informiert, sodass dieser die Verunreinigungen entfernen oder Beschädigungen beheben kann, bevor diese zu einer Fehlauslösung führen. Hierdurch können längere Standzeiten der Erntemaschine 1 vermieden werden.

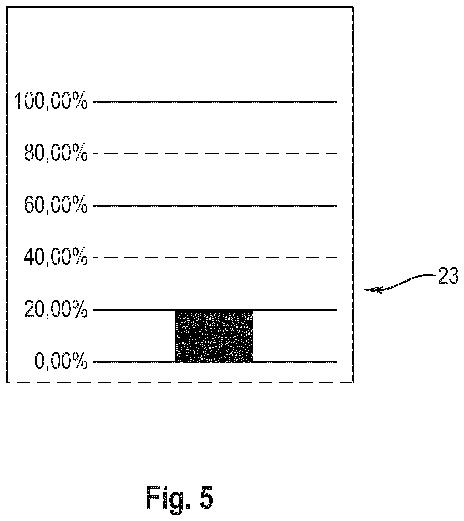

Hier und vorzugsweise kann die Anzeigeeinrichtung 20 den Zustand der Einzugswalze 5a in einen in Fig. 5 abgebildeten Balkendiagramm 23 darstellen. Der graphisch dargestellte Zustand der Einzugswalze 5a umfasst eine graphische Darstellung einer Abweichung der Referenzmessung 18 von dem im Erntebetrieb ermittelten Messsignal 14 der Metalldetektionseinrichtung 10, sodass diese insbesondere die durch metallische Verunreinigungen oder Beschädigungen induzierte Störspannungen 16 graphisch darstellt. Insbesondere kann das Balkendiagramm von 0% bis 100% skaliert sein, wobei bei 100% keine Störspannungen 16 ermittelt wurden und bei 0% die induzierten Störspannungen 16 größer oder gleich dem Detektionsschwellwert 13 sind. In einer alternativen Ausgestaltung kann die Anzeigeeinrichtung lediglich eine Kennziffer, vorzugsweise eine Prozentangabe von 0% bis 100% anzeigen, die den Zustand der Einzugswalze 5a beschreibt. Hierbei kann die Kennziffer eine Abweichung des Messsignals 14 von der Referenzmessung beschreiben. Beispielsweise kann eine Kennziffer von 100% ausgegeben werden, wenn keine Störspannungen 16 ermittelt wurden und eine Kennziffer von 0% ausgegeben bzw. angezeigt werden, wenn die induzierten Störspannungen 16 größer oder gleich dem Detektionsschwellwert 13 sind.

### Bezugszeichenliste:

- 1: Landwirtschaftliche Erntemaschine
- 2: Erntevorsatz
- 3: Erntegut
- 4: Feldbestand
- 5: Förderaggregat
- 5a-d: Einzugswalzen
- 6: Strömungsrichtung
- 7: Verarbeitungsaggregat
- 8: Überladerohr
- 9: Metallischer Fremdkörper
- 10: Metalldetektionseinrichtung
- 10a: Magnetanordnung
- 10b: Messeinrichtung
- 10c: Signalerzeugungseinrichtung
- 11: Magnetfeld
- 12: Steuerungseinrichtung
- 13: Detektionsschwellwert
- 14: Messsignal
- 15: Störspannungen
- 16: Störspannungen
- 17: Periodische Abweichung
- 18: Referenzmessung
- 19: Kompensiertes Signal
- 20: Anzeigeeinrichtung
- 21: Nulllinie
- 22: Grenzwert
- 23: Balkendiagramm
- 24: Sensoranordnung

## Patentansprüche

1. Landwirtschaftliche Erntemaschine (1), insbesondere Feldhäcksler, mit einem Erntevorsatz (2) zum Aufnehmen von Erntegut (3) aus einem Feldbestand (4), mit einem mindestens eine Einzugswalze (5a, 5b, 5c, 5d) aufweisenden Förderaggregat (5) zum Fördern des aufgenommenen Ernteguts (3), mit einem Verarbeitungsaggregat (7), dem das Erntegut (3) von dem Förderaggregat (5) zugefördert wird und das das Erntegut (3) verarbeitet, und mit einer Metalldetektionseinrichtung (10), die mit einer der Einzugswalzen (5a, 5b, 5c, 5d) derart gekoppelt ist, dass metallische Fremdkörper (9) im an der Einzugswalze (5a) vorbeigeführten Erntegut (3) erfasst werden können,
**dadurch gekennzeichnet, dass**
die landwirtschaftliche Erntemaschine (1) eine mit der Metalldetektionseinrichtung (10) in signalübertragender Weise verbundene Steuerungseinrichtung (12) aufweist, die zum Identifizieren periodisch auftretender Abweichungen (17) eines Messsignals (14) der Metalldetektionseinrichtung (10) von einer Referenzmessung (18) vorgesehen und eingerichtet ist, wobei bei einer Identifikation der periodisch auftretenden Abweichungen (17) eine Hinweismeldung ausgegeben wird, bevor die periodisch auftretenden Abweichungen (17) einen Detektionsschwellwert (13) überschreiten.

2. Landwirtschaftliche Erntemaschine (1) nach Anspruch 1, **dadurch gekennzeichnet, dass** die Steuerungseinrichtung (12) zum Ansteuern des Förderaggregats (5) vorgesehen und eingerichtet ist, wobei die Steuerungseinrichtung (12) das Förderaggregat (5) derart ansteuert, sodass diese bei einem Überschreiten des Detektionsschwellwerts (13) das Förderaggregat (5) stoppt.

3. Landwirtschaftliche Erntemaschine (1) nach einem der Ansprüche 1 oder 2, **dadurch gekennzeichnet, dass** die Referenzmessung (18) das Messsignal (14) der Metalldetektionseinrichtung (10) bei einem erntegutfreien Umlauf der mit der Metalldetektionseinrichtung (10) gekoppelten Einzugswalze (5a) umfasst.

4. Landwirtschaftliche Erntemaschine (1) nach einem der Ansprüche 1 bis 3, **dadurch gekennzeichnet, dass** die Referenzmessung (18) zumindest eine mittels der Metalldetektionseinrichtung (10) induzierte Spannung in Abhängigkeit eines Drehwinkels der mit der Metalldetektionseinrichtung (10) gekoppelten Einzugswalze (5a) umfasst.

5. Landwirtschaftliche Erntemaschine (1) nach einem der Ansprüche 1 bis 4, **dadurch gekennzeichnet, dass** das Messsignal (14) eine in der Metalldetektionseinrichtung (10) induzierte Spannung ist.

6. Landwirtschaftliche Erntemaschine (1) nach einem der Ansprüche 1 bis 5, **dadurch gekennzeichnet, dass** die Steuerungseinrichtung (12) dazu vorgesehen und eingerichtet ist, ein kompensiertes Signal (19) zu ermitteln, indem diese ein im Erntebetrieb der landwirtschaftliche Erntemaschine (1) mittels der Metalldetektionseinrichtung (10) ermitteltes Messsignal (14) mit der Referenzmessung (18) verrechnet, insbesondere das Messsignal (14) von der Referenzmessung (18) subtrahiert oder die Referenzmessung (18) von dem Messsignal (14) der Metalldetektionseinrichtung (10) subtrahiert.

7. Landwirtschaftliche Erntemaschine (1) nach Anspruch 6, **dadurch gekennzeichnet, dass** die periodisch auftretenden Abweichungen (17) von einer Nulllinie (21) des kompensierten Signals (19) abweichende Störspannungen (16) sind, wobei bei einem Überschreiten eines Grenzwertes (22) des kompensierten Signals (19) die Hinweismeldung ausgegeben wird, wobei vorzugsweise der Grenzwert (22) kleiner als der Detektionsschwellwert (13) ist.

8. Landwirtschaftliche Erntemaschine (1) nach einem der Ansprüche 1 bis 7, **dadurch gekennzeichnet, dass** die landwirtschaftliche Erntemaschine (1) eine Anzeigeeinrichtung (20) umfasst, wobei bei einer Identifikation der periodisch auftretenden Abweichungen (17) die Hinweismeldung auf der Anzeigeeinrichtung (20) angezeigt wird, wobei die Hinweismeldung vorzugsweise einen Hinweis umfasst, dass zumindest eine der Einzugswalzen (5a-d) auf Verunreinigungen und/oder Beschädigungen zu prüfen ist.

9. Landwirtschaftliche Erntemaschine (1) nach Anspruch 8, **dadurch gekennzeichnet, dass** die Anzeigeeinrichtung (20) eine graphische Darstellung eines Zustands und/oder eine den Zustand repräsentierende Kennziffer zumindest einer der Einzugswalzen (5a-d), insbesondere der mit der Metalldetektionseinrichtung (10) gekoppelten Einzugswalze (5a) anzeigt, wobei die graphische Darstellung vorzugsweise ein Balkendiagramm (23) umfasst.

10. Landwirtschaftliche Erntemaschine (1) nach Anspruch 9, **dadurch gekennzeichnet, dass** der graphisch dargestellte Zustand der zumindest einen Einzugswalze (5a-d) eine graphische Darstellung einer Abweichung der Referenzmessung (18) von dem Messsignal (14) der Metalldetektionseinrichtung (10) umfasst.

11. Landwirtschaftliche Erntemaschine (1) nach einem der Ansprüche 1 bis 10, **dadurch gekennzeichnet, dass** die periodisch auftretenden Abweichungen (17) durch zumindest an einer der Einzugswalzen (5a-d) anhaftenden metallischen Verunreinigung und/oder Beschädigung verursacht sind.
